# DEMANDE DE BREVET EUROPEEN

(11) **EP 1 821 233 A2**
(43) Date de publication de la demande: **22.08.2007**
(21) Numéro de dépôt: 07102472.3
(22) Date de dépôt: 15.02.2007
(51) Int. Cl.: G06F 21/02

(54) **Cadencement de tâches non sécurisées et sécurisées**

(30) Priorité: 15.02.2006 FR 0650541
(71) Demandeur: ST MICROELECTRONICS S.A., 92120 Montrouge (FR)
(72) Inventeur: Orlando, William, PEYNIER 13790 (FR); Courcambeck, Stéphan, PLAN DE CUQUES 13380 (FR)
(74) Mandataire: de Beaumont, Michel

(57) **Abrégé**

L'invention concerne un procédé et un système de partage d'une horloge par un circuit électronique entre au moins une première tâche cadencée par au moins un premier compteur et au moins une deuxième tâche cadencée par un deuxième compteur, les deux compteurs évoluant au rythme de ladite horloge, le contenu du premier compteur majoré ou minoré d'une valeur de décalage étant, à chaque exécution de la deuxième tâche, affecté audit deuxième compteur.

## Description

### Domaine de l'invention

La présente invention concerne de façon générale les circuits de traitement numérique et, plus particulièrement les microprocesseurs susceptibles d'exécuter des tâches dites sécurisées, c'est-à-dire manipulant des quantités numériques censées rester secrètes. Il peut s'agir, par exemple, de tâches de chiffrement utilisant des mécanismes à clés publiques (asymétriques) ou à clés secrètes (symétriques).

L'invention s'applique plus particulièrement aux systèmes de traitement de données numériques utilisant au moins deux systèmes d'exploitation (operating system) parmi lesquels un système d'exploitation sécurisé.

L'invention vise plus particulièrement la protection d'un système partageant un compteur temporel, contre des attaques par interprétation du temps de traitement de quantités numériques à protéger. De telles attaques sont le plus souvent désignées par l'appellation anglo-saxonne "timing attacks".

### Exposé de l'art antérieur

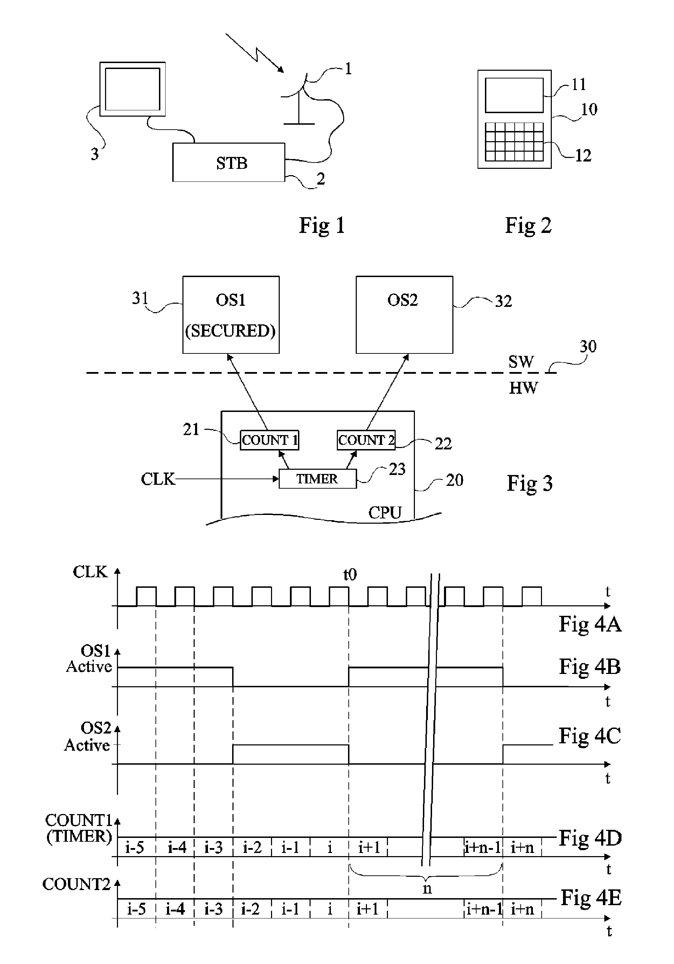

La figure 1 représente, de façon très schématique et sous forme de blocs, un premier exemple d'application de la présente invention à un système de télédiffusion contrôlé (par exemple, de type télévision à péage). Des signaux reçus par une antenne 1 (par exemple une antenne satellite) sont décodés par un décodeur 2 (STB pour "Set Top Box") pour être affichés sur un téléviseur 3. Le décodeur 2 contient des circuits de traitement numérique parmi lesquels au moins un processeur susceptible d'exécuter des tâches de déchiffrement à partir d'une clé intégrée au décodeur ou contenue dans un support, par exemple une carte à puce lisible par le décodeur. Le décodeur 2 est susceptible d'héberger non seulement des applications sécurisées liées au décodage mais également des applications et/ou un système d'exploitation non sécurisés pour, par exemple la présentation de l'interface utilisateur de l'écran, certains programmes de jeu, etc.

La figure 2 représente un deuxième exemple d'application de la présente invention à un téléphone mobile 10, pourvu d'un écran 11 et d'un clavier 12. Un système d'exploitation sécurisé concerne, par exemple, le système de gestion des droits d'accès au réseau de communication (par exemple, téléphonique) tandis qu'un système d'exploitation non sécurisé concerne, par exemple, le traitement d'images prises par un objectif que comporte l'appareil 10, ou tout autre programme ne requérant pas de protection pour exécution.

Un autre exemple non représenté d'application de la présente invention concerne les microordinateurs personnels susceptibles de fonctionner sous deux systèmes d'exploitation différents, l'un étant considéré comme sécurisé.

La figure 3 représente, de façon très schématique et sous forme de blocs, le fonctionnement classique d'une unité centrale de traitement 20 (CPU) d'un processeur du type auquel s'applique la présente invention. En figure 3, les couches matérielle (HW) et logicielle (SW) ont été séparées par un pointillé 30.

D'un point de vue matériel, l'unité centrale de traitement 20 comporte un compteur temporel 23 (TIMER) cadencé par un signal d'horloge CLK et chargé de synchroniser le fonctionnement de l'ensemble du système. Ce compteur temporel 23 est considéré comme sécurisé, en ce sens que l'information qu'il contient sur le nombre de cycles d'horloge utilisés n'est pas directement accessible depuis l'extérieur du circuit.

Un premier système d'exploitation (bloc 31, OS1) considéré comme sécurisé (SECURED) utilise le compteur temporel 23 lorsqu'il a besoin d'exécuter des tâches qui lui sont affectées. Dans certains cas, le premier système d'exploitation utilise directement le compteur 23 comme séquenceur. Dans d'autres cas, un registre 21 définissant un compteur COUNT1 sert de séquenceur dédié au premier système d'exploitation. Ce compteur (COUNT1) est incrémenté au rythme CLK du compteur temporel 23. Un deuxième système d'exploitation (bloc 32, OS2) considéré comme non sécurisé utilise également le compteur temporel 23 pour mettre à jour un compteur COUNT2 stocké dans un registre 22. Le fait que le système d'exploitation 31 soit considéré comme sécurisé signifie que le contenu de son registre d'horloge 21 n'est pas accessible par l'autre système d'exploitation. Le fait que le système d'exploitation 32 ne soit pas sécurisé signifie que les valeurs prises par son registre d'horloge 22 sont accessibles par les deux systèmes d'exploitation.

La mise à disposition de l'unité centrale 20 pour l'un ou l'autre des systèmes d'exploitation est gérée par un mécanisme de partage des ressources matérielles en fonction de diverses règles de priorité d'accès. Le cas échéant, les registres d'horloge dédiés aux différents systèmes d'exploitation (notamment celui du système non sécurisé) sont dans la couche logicielle.

Les figures 4A, 4B, 4C, 4D et 4E illustrent, par des chronogrammes, un exemple arbitraire de répartition des tâches entre les deux systèmes d'exploitation de la figure 3, illustrant le problème des attaques temporelles. La figure 4A représente le signal d'horloge CLK. La figure 4B illustre des périodes d'activité (Active) du premier système d'exploitation OS1. La figure 4C illustre des périodes d'activité (Active) du deuxième système d'exploitation OS2. La figure 4D illustre le contenu du compteur temporel 23 (TIMER) qui est identique à celui du registre d'horloge 21 (COUNT1) s'il existe. La figure 4E illustre le contenu du registre d'horloge 22 (COUNT2).

On suppose arbitrairement que le premier système d'exploitation OS1 a la main pendant des cycles i-5 et i-3 (figure 4D), que le deuxième système d'exploitation a la main pendant des cycles i-2 et i et qu'une tâche sensible du point de vue de la sécurité des données manipulées est exécutée par le premier système d'exploitation entre les cycles i+1 et i+n-1, la main étant redonnée au deuxième système d'exploitation à partir du cycle i+n.

Comme l'illustre la figure 4E, le contenu du registre 22 juste avant l'instant t0 où le premier système OS1 prend la main pour la tâche sensible est i et ce contenu, lorsque la main lui est redonnée est i+n. Comme le contenu du registre 22 est accessible, le nombre n de cycles d'horloge pendant lesquels le premier système d'exploitation a eu la main pour l'exécution des tâches sensibles est donc disponible, même si le contenu du registre 21 ou du compteur 23 n'est pas accessible. Or, ce nombre de cycles peut être exploité pour déterminer la valeur des quantités manipulées, le temps de traitement d'un bit à l'état un étant différent du temps de traitement d'un bit à l'état zéro.

Un exemple d'attaques temporelles sur un algorithme AES est décrit dans l'article "Cache-timing attacks on AES" de Daniel J. Bernstein (Department of Mathematics, Statistics, and Computer Science - The University of Illinois - Chicago, http://cr.yp.to/antiforgery/cachetiming-20050414.pdf.

Une solution connue pour résoudre ce problème est décrite dans le brevet américain N° 5 994 917 et consiste à introduire un pseudo-aléa dans la fréquence du signal d'horloge. Cela revient à prévoir deux horloges matériellement différentes dans l'unité centrale, chaque horloge étant respectivement affectée à l'un des systèmes d'exploitation.

Un problème est que la réalisation d'une horloge matérielle dédiée à chaque système d'exploitation n'est pas toujours possible.

### Résumé de l'invention

La présente invention vise à proposer un procédé et un système de cadencement de tâches non sécurisées sur un processeur supportant simultanément un système d'exploitation sécurisé et un système d'exploitation non sécurisé au moyen d'un seul signal d'horloge matériel.

L'invention vise plus particulièrement à permettre une protection contre des attaques par examen des durées d'exécution des tâches sécurisées.

Plus généralement, la présente invention vise à rendre inexploitable les durées d'exécution de tâches par des systèmes d'exploitation différents tout en autorisant le recours à une même horloge de référence matérielle ou logicielle.

Pour atteindre tout ou partie de ces objets ainsi que d'autres, la présente invention prévoit un procédé de partage d'une horloge par un circuit électronique entre au moins une première tâche cadencée par au moins un premier compteur et au moins une deuxième tâche cadencée par un deuxième compteur, les deux compteurs évoluant au rythme de ladite horloge, le contenu du premier compteur majoré ou minoré d'une valeur de décalage étant, à chaque exécution de la deuxième tâche, affecté audit deuxième compteur.

Selon un mode de mise en oeuvre de la présente invention, chaque compteur est affecté à un système d'exploitation différent d'un processeur.

Selon un mode de mise en oeuvre de la présente invention, ledit premier compteur est un compteur temporel du processeur.

L'invention prévoit également un procédé de partage d'une première valeur d'un compteur temporel entre au moins un premier compteur de cadencement d'au moins une première tâche et au moins un deuxième compteur de cadencement d'au moins une deuxième tâche, lesdits compteurs évoluant au rythme d'une même horloge et étant mis à jour avec ladite première valeur majorée ou minorée d'une deuxième valeur différente pour chaque compteur.

L'invention prévoit également un procédé de protection de la durée d'au moins une première tâche cadencée par au moins un premier compteur, par une analyse de durée d'au moins une deuxième tâche cadencée par un deuxième compteur.

Selon un mode de mise en oeuvre de la présente invention, ladite valeur de décalage est choisie aléatoirement.

L'invention prévoit également un système de partage d'une horloge entre au moins un premier système d'exploitation cadencé par au moins un premier compteur et au moins un deuxième système d'exploitation cadencé par un deuxième compteur.

L'invention prévoit également un microprocesseur comportant un tel système.

L'invention prévoit également un système de partage d'une première valeur entre au moins un premier compteur de cadencement d'au moins une première tâche et au moins un deuxième compteur de cadencement d'au moins une deuxième tâche.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 décrite précédemment représente un premier exemple d'application de la présente invention ;
la figure 2 décrite précédemment représente un deuxième exemple d'application de la présente invention ;
la figure 3 décrite précédemment illustre, de façon très schématique, un exemple classique de partage d'une même unité de traitement par deux systèmes d'exploitation ;
les figures 4A, 4B, 4C, 4D et 4E décrites précédemment illustrent par des chronogrammes le fonctionnement du système de la figure 3 ;
la figure 5 illustre, de façon très schématique et sous forme de blocs, un premier mode de réalisation de la présente invention appliquée au partage d'une même unité de traitement par deux systèmes d'exploitation ;
les figures 6A, 6B, 6C, 6D et 6E illustrent, par des chronogrammes, un mode de mise en oeuvre de la présente invention appliqué au système de la figure 5 ; et
la figure 7 représente, de façon très schématique et sous forme de blocs, un deuxième mode de réalisation de la présente invention appliqué à la protection de tâches exécutées par deux systèmes d'exploitation.

De mêmes éléments ont été désignés par les mêmes références aux différentes figures. Pour des raisons de clarté, seuls les étapes et éléments utiles à la compréhension de l'invention ont été représentés et seront décrits par la suite. En particulier, les éléments permettant le passage d'un système d'exploitation à l'autre n'ont pas été détaillés, la présente invention étant compatible avec tout procédé ou système connu. De plus, les mécanismes de traitement proprement dits des tâches exécutées par les différents systèmes d'exploitation n'ont pas non plus été détaillés, l'invention étant là encore compatible avec les mécanismes classiques.

### Description détaillée

L'invention sera décrite par la suite en relation avec un exemple d'application à des tâches exécutées pour des systèmes d'exploitation différents. Elle s'applique plus généralement à un partage d'une même référence d'horloge (signal d'horloge ou compteur temporel matériel ou logiciel) par des programmes différents (tâches différentes). Sauf précision contraire, tout ce qui sera décrit en relation avec des systèmes d'exploitation différents s'applique à l'exécution, par plusieurs instances (exécutions) d'un même système d'exploitation, de programmes applicatifs différents.

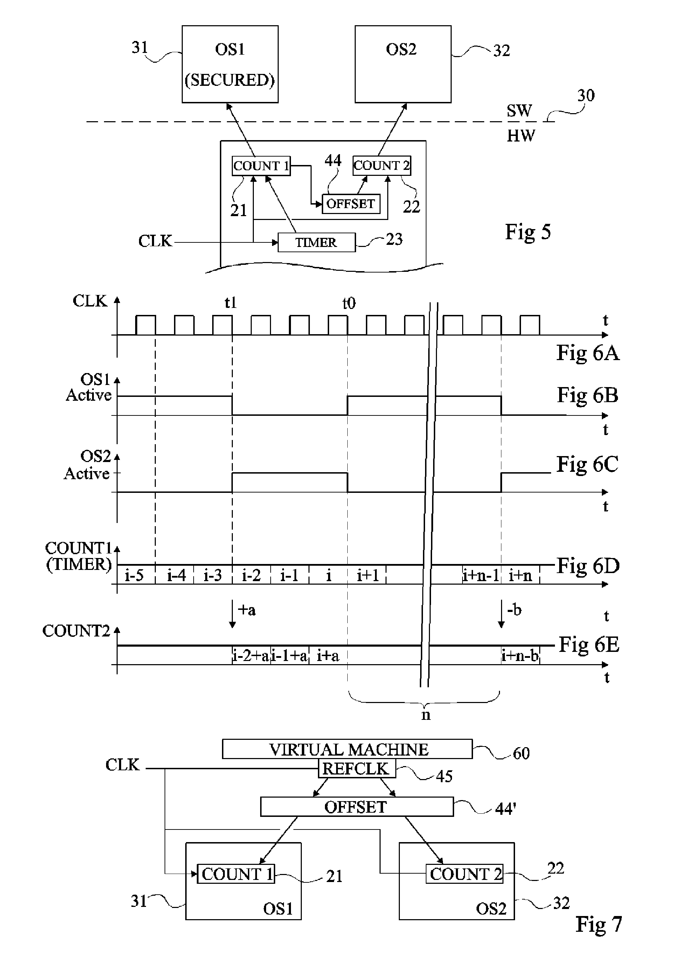

La figure 5 représente, de façon très schématique et sous forme de blocs, par une vue à rapprocher de la figure 3, un mode de réalisation d'un système selon la présente invention. Comme précédemment, un pointillé 30 distingue la couche matérielle HW de la couche logicielle SW du système et deux systèmes d'exploitation (blocs 31, OS1 et 32, OS2), respectivement sécurisé (SECURED) et non sécurisé ont accès au même processeur matériel 20 (CPU) qu'ils se partagent.

Côté unité centrale de traitement 20, un signal d'horloge CLK cadence un compteur temporel 23 (TIMER) utilisé par l'unité centrale pour exécuter les instructions provenant des deux systèmes d'exploitation. Ce compteur est considéré comme sécurisé, c'est-à-dire que son contenu n'est pas accessible au moins par le deuxième système d'exploitation.

Selon l'exemple de la figure 5, un premier registre d'horloge 21 (COUNT1) est affecté au premier système d'exploitation 31 et un deuxième registre d'horloge 22 (COUNT2) est affecté au deuxième système d'exploitation 32. Les deux registres 21 et 22 sont cadencés par le même signal d'horloge CLK que le compteur général 23. Le registre 21 sert à séquencer les tâches du système 31 et il n'est accessible ni en lecture ni en écriture par le système 32. Le registre 22 sert à séquencer les tâches du système 32 et n'est pas sécurisé. Il est donc accessible et modifiable par les deux systèmes d'exploitation.

Lors de tâches exécutées par le premier système d'exploitation, le registre 21 contient la même valeur que le compteur 23. Mais, lors de tâches exécutées par le deuxième système d'exploitation, son registre d'horloge 22 est chargé avec une valeur différente de celle du compteur 23. Par exemple, à chaque affectation de l'unité centrale au deuxième système d'exploitation, le registre 22 est chargé avec la valeur du registre 21 incrémentée ou décrémentée d'un nombre de cycles d'horloge. Cette fonction a été illustrée en figure 5 par une liaison entre les registres 21 et 22 sur laquelle est intercalée une fonction 44 (OFFSET) d'incrément ou de décrément par un nombre variable (de préférence choisi aléatoirement à chaque affectation de l'unité de traitement au système d'exploitation non sécurisé). La valeur fournie par la fonction 44 n'est pas accessible par le système d'exploitation non sécurisé.

Par conséquent, le nombre contenu dans le registre 22 dédié au deuxième système d'exploitation ne fournit pas d'indication sur le nombre de cycles utilisés par le premier.

En variante, le compteur 23 est directement utilisé par le premier système d'exploitation. Son contenu, lorsqu'il est transféré au registre d'horloge 22, est alors majoré ou minoré du nombre variable de cycles par la fonction 44.

Les figures 6A à 6E illustrent, par des chronogrammes à rapprocher de ceux des figures 4A à 4E, le fonctionnement du système de la figure 5. La figure 6A représente un exemple d'allure du signal d'horloge CLK. Les figures 6B et 6C représentent des exemples d'affectation de l'unité centrale aux systèmes d'exploitation OS1 et OS2, respectivement. La figure 6D représente le contenu du registre d'horloge 21 (COUNT1), identique à celui du compteur temporel 23 (TIMER). La figure 6E illustre le contenu du registre d'horloge 22 (COUNT2).

Comme précédemment, on suppose l'exécution, à partir d'un instant t0, de tâches sensibles du point de vue de la sécurité des informations qu'elles manipulent par le premier système d'exploitation, pour un nombre n-1 de cycles d'horloge.

Toujours comme précédemment, on suppose que l'unité centrale est affectée au premier système d'exploitation pendant les cycles i-5 à i-3 et au deuxième système d'exploitation pour les trois cycles suivants.

Selon ce mode de mise en oeuvre de la présente invention, le registre 22 est chargé avec la valeur i+a-2 à l'instant (t1) où le deuxième système d'exploitation doit prendre la main. La valeur a est la valeur fournie par la fonction 44. Par conséquent, juste avant l'instant t0 où le premier système d'exploitation reprend la main, le contenu du registre 22 est i+a au lieu de i dans le système classique.

Le registre 21 contient la valeur de l'horloge sécurisée (temps absolu) et sa valeur n'est pas modifiée. Par conséquent, à partir de l'instant t0, la valeur du compteur COUNT1 est i+1 pour l'exécution des n cycles par le premier système d'exploitation.

A l'issue de cette exécution, on suppose que le deuxième système d'exploitation reprend la main. Le registre 22 est alors chargé avec une valeur correspondant à celle du compteur COUNT1, décrémentée d'une valeur b. Il en découle que la valeur accessible contenue dans le registre 23 est i+n-b, au lieu de i+n.

Par conséquent, l'examen des valeurs i+n-b et i+a contenues dans le registre 23 à la fin et au début de l'exécution des n cycles sensibles par le premier système d'exploitation ne permet pas de déterminer ce nombre n.

Le choix entre un incrément ou un décrément à chaque affectation de l'unité de traitement au deuxième système d'exploitation est, par exemple, aléatoire. Dans le cas d'un décrément, on veillera préférentiellement à ce que la valeur (b) soit inférieure au nombre (n) de cycles pendant lequel le premier système vient d'avoir la main pour préserver le sens de progression du registre d'horloge 22.

La figure 7 illustre, de façon très schématique et sous forme de blocs, une variante de l'invention appliquée à l'utilisation de valeurs différentes pour des registres d'horloges 21 et 22 respectivement affectés à deux systèmes d'exploitation 31 (OS1) et 32 (OS2). Dans l'exemple de la figure 7, on considère le cas d'une machine virtuelle (bloc 50, VIRTUAL MACHINE) fournissant une valeur d'horloge de référence (bloc 45, REFCLK) d'un compteur temporel. A chaque fois que cette valeur doit servir à initialiser ou mettre à jour le registre d'horloge d'un des systèmes d'exploitation, un décalage (bloc 44, OFFSET) est appliqué à la valeur REFCLK du registre 45 pour définir la valeur du registre d'horloge concerné. Les registres d'horloge 21 et 22 sont ensuite alternativement utilisés par les différentes instances des systèmes d'exploitation.

Un avantage de la présente invention est qu'elle permet de partager une même horloge de référence pour plusieurs systèmes d'exploitation en protégeant l'exécution de tâches par au moins un des systèmes contre des attaques temporelles.

Bien entendu, la présente invention est susceptible de diverses variantes et modifications qui apparaîtront à l'homme de l'art. En particulier, bien que l'invention ait été décrite en relation avec un exemple à deux systèmes d'exploitation, elle s'applique plus généralement quel que soit le nombre de systèmes d'exploitation mis en oeuvre. De plus, bien que le terme "registre" ait été utilisé pour désigner les éléments contenant les valeurs des compteurs, ces éléments peuvent être n'importe quel élément de mémorisation, volatile ou non, pourvu d'être réinscriptible. En outre, tout ce qui a été décrit en relation avec des compteurs de cadencement incrémentés au rythme de l'horloge partagée se transpose à des compteurs décrémentés au rythme de cette horloge. Enfin, la mise en oeuvre pratique de l'invention, que ce soit par des moyens matériels ou logiciels, est à la portée de l'homme du métier à partir des indications fonctionnelles données ci-dessus.

## Revendications

1. Procédé de partage d'une horloge (CLK) par un circuit électronique entre au moins une première tâche (OS1) cadencée par au moins un premier compteur (TIMER, COUNT1) et au moins une deuxième tâche (OS2) cadencée par un deuxième compteur (COUNT2), les deux compteurs évoluant au rythme de ladite horloge, **caractérisé en ce qu'**à chaque exécution de la deuxième tâche, le contenu du premier compteur majoré ou minoré d'une valeur de décalage (OFFSET) choisie aléatoirement est affecté audit deuxième compteur.

2. Procédé selon la revendication 1, dans lequel chaque compteur (COUNT1, COUNT2) est affecté à un système d'exploitation différent (OS1, OS2) d'un processeur (20).

3. Procédé selon la revendication 2, dans lequel ledit premier compteur (TIMER) est un compteur temporel du processeur (20).

4. Procédé de partage d'une première valeur (REFCLK) d'un compteur temporel entre au moins un premier compteur (COUNT1) de cadencement d'au moins une première tâche (OS1) et au moins un deuxième compteur (COUNT2) de cadencement d'au moins une deuxième tâche (OS2), lesdits compteurs évoluant au rythme d'une même horloge, **caractérisé en ce que** les premier et deuxième compteurs sont mis à jour avec ladite première valeur majorée ou minorée d'une deuxième valeur (OFFSET) différente pour chaque compteur et choisie aléatoirement.

5. Procédé de protection de la durée d'au moins une première tâche (OS1) cadencée par au moins un premier compteur (TIMER, COUNT1), par une analyse de durée d'au moins une deuxième tâche (OS2) cadencée par un deuxième compteur (COUNT2), **caractérisé en ce qu'**il met en oeuvre un procédé de partage selon l'une quelconque des revendications 1 à 4.

6. Système de partage d'une horloge (CLK) entre au moins un premier système d'exploitation (OS1) cadencé par au moins un premier compteur (TIMER, COUNT1) et au moins un deuxième système d'exploitation (OS2) cadencé par un deuxième compteur (COUNT2), **caractérisé en ce qu'**il comporte des moyens pour la mise en oeuvre du procédé selon l'une quelconque des revendications 1 à 3.

7. Microprocesseur (20) comportant un système selon la revendication 6.

8. Système de partage d'une première valeur (REFCLK) entre au moins un premier compteur (COUNT1) de cadencement d'au moins une première tâche (OS1) et au moins un deuxième compteur (COUNT2) de cadencement d'au moins une deuxième tâche (OS2), **caractérisé en ce qu'**il comporte des moyens pour la mise en oeuvre du procédé selon la revendication 4.
